# EUROPEAN PATENT SPECIFICATION

(11) **EP 4 108 464 B1**
(45) Date of publication and mention of the grant of the patent: **04.10.2023**
(21) Application number: 22190436.0
(22) Date of filing: 03.12.2018
(51) Int. Cl.: B41J 2/175

(54) **PRINTABLE LIQUID SUPPLY CARTRIDGES**
DRUCKBARE FLÜSSIGKEITSZUFUHRKASSETTEN
CARTOUCHES D'ALIMENTATION EN LIQUIDE IMPRIMABLE

(43) Date of publication of application: 28.12.2022
(62) Divisional of application: 18821928.1
(73) Proprietor: Hewlett-Packard Development Company, L.P., Spring TX 77389 (US)
(72) Inventor: STUDER, Anthony D., 97330-4239 Corvallis (US); OLSEN, David, 97330-4239 Corvallis (US)
(74) Representative: Haseltine Lake Kempner LLP

(56) References cited:
- WO-A1-2012/054050
- WO-A1-2017/189011
- US-A1- 2002 109 761
- US-A1- 2012 056 955

## Description

### BACKGROUND

Printable liquid supply cartridges are used to supply printable liquids, such as ink, for printing. Mechanical, electronic and fluidic interfaces may be provided to engage with, communicate with and supply printable liquid to a printer. WO2018/022038 discloses a horizontal interface for a cartridge having a digital level sensor. WO2012/054050 discloses a cartridge having structures for engaging with a printer. US2002/109761 describes a liquid container and recording apparatus. WO2017/189011 describes a printing cartridge including a sensing die. US2012/056955 describes a printing material cartridge having a circuit board.

### SUMMARY

Aspects or embodiments relate to a printable liquid supply cartridge in accordance with the appended claims.

### BRIEF DESCRIPTION OF DRAWINGS

Examples will now be described, by way of non-limiting example, with reference to the accompanying drawings, in which:
FIG. 1 is an example printable liquid supply cartridge;
FIG. 2 is a cross-sectional view through the line C-C of FIG. 1;
FIG. 3 is an example arrangement of electrical connection pads;
FIG. 4 shows example electronic circuitry of an example cartridge;
FIG. 5 is an example printable liquid supply cartridge;
FIGS. 6A and 6B are perspective views of an example printable liquid supply cartridge;
FIG. 7 is an enlarged view of part of the cartridge of FIGS. 6A and 6B;
FIGS. 8A-8D show an example printable liquid supply cartridge at stages of attachment to a printer;
FIG. 9 is an example printable liquid supply cartridge with part of the housing not shown;
FIG. 10 is an example printable liquid supply cartridge with part of the housing not shown;
FIG. 11 is an example printable liquid supply cartridge with part of the housing not shown;
FIG. 12 is an example printable liquid supply cartridge.
Fig. 13 is a perspective view of an example printable liquid supply cartridge;
FIG. 14 is another perspective view of the example cartridge of FIG. 13.

### DETAILED DESCRIPTION

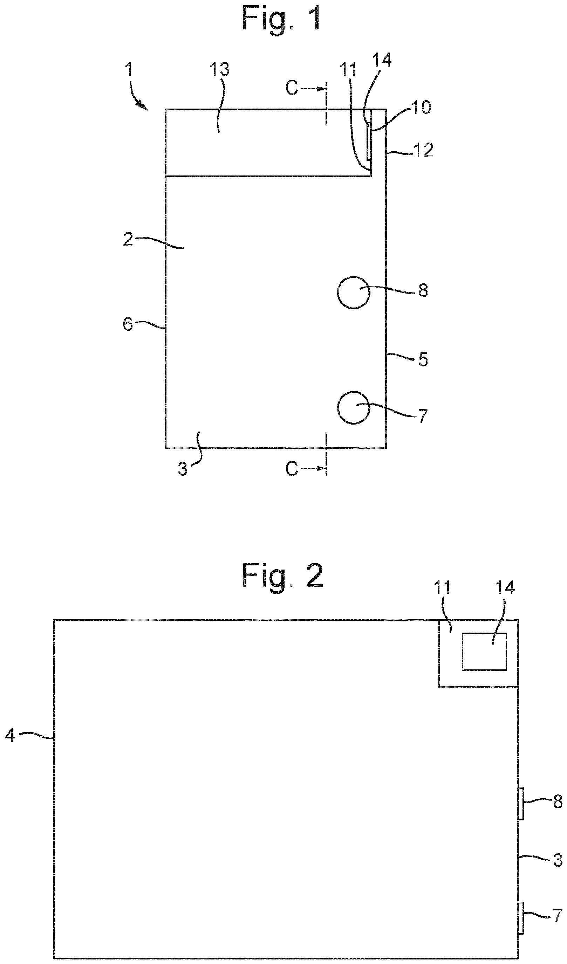

Fig. 1 shows an example printable liquid supply cartridge 1. More particularly, FIG. 1 shows a plan view of the example cartridge 1. The cartridge 1 has a housing 2 which encloses an internal volume in which the printable liquid, such as ink, can be stored. The internal volume of the example cartridges described herein may be between approximately 10 millilitres to approximately 50 or approximately 100 millilitres. The housing 2 has a front end 3, a rear end 4 and first and second sides 5, 6 extending from the front end to the rear end. The front end 3 and the rear end 4 can be seen also in Fig. 2, which is a cross-sectional view through the line C-C of Fig. 1. The housing 2 may comprise two relatively hard plastic shells which directly contain the printable liquid therebetween. In the example, the height of the housing is greater than the width of the housing. Similarly, the height of the internal volume is greater than the width of the internal volume. The height of the internal volume is defined by substantially the height of the first and second sides and the width of the internal volume is defined by the distance between the first and second sides.

The front end 3 may have a printable liquid outlet 7 through which the printable liquid can be supplied to a printer, for example by insertion of a fluid pen of the printer therein. The printable liquid outlet 7 may be provided closer to the bottom than to the top of the front end 3.

A gas inlet 8 may be provided on the front end 3 also, to enable gas such as air to be supplied to the cartridge, for example by insertion of a fluid pen of the printer therein. The gas inlet 8 may be positioned above the printable liquid outlet 7.

A first wall 10 having an internal side 11 and an external side 12 may be provided to delimit a recess 13. In the example shown, the recess 13 extends from the first wall 10 across the entire width of the front end 3. The first wall 10 thus overhangs a notched corner of the housing. The external side 12 of the first wall 10 may be part of the first side 5 of the housing 2. Electrical connection pads 14 are exposed on the internal side of the first wall, as shown also in Fig. 2. The electrical connection pads are indicated by a single block in Figs. 1 and 2. In one example there are at least three electrical connection pads, although fewer connection pads may be provided. The electrical connection pads may be arranged in a top to bottom direction. The electrical connection pads enable electrical signals to be communicated between electrical circuitry of the cartridge and electrical circuitry of the printer, for example in accordance with an I2C data communication protocol. Hence, the connection pads may form an I2C data interface. Providing the electrical connection pads 14 to the first wall 10 allows for easy mounting of the electrical connection pads 14 on the cartridge. Being positioned on the internal side 11, the electrical connection pads 14 are protected from damage when shipping and handling the cartridge. The recess 13 can receive an electrical connector of a printer to establish an electrical connection between the electrical connection pads 14 and the electrical connector.

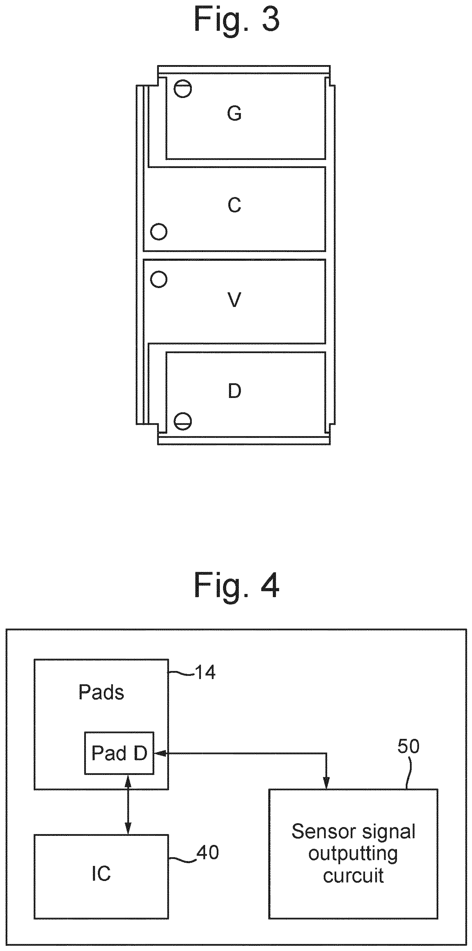

Fig. 3 shows an example arrangement of electrical connection pads. In this arrangement, four electrical connection pads include, from top to bottom, a ground connection pad G, a serial clock connection pad C, a supply voltage connection pad V, and a serial data input/output pad D.

Electrical circuitry may be provided in the cartridge 1 and connected to the electrical connection pads 14. The electrical circuitry may include an integrated circuit 40. The integrated circuit 40 may function as a microcontroller and store a secure key to authenticate communications to the printer through the I2C data interface. The integrated circuit may be attached to the first wall 10.

Alternatively or additionally, the electrical circuitry may include a sensor signal outputting circuit 50. This circuit may be connected to the I2C data interface. If the sensor signal outputting circuit and the integrated circuit are both provided, they may share the same data pad D to communicate through the I2C data interface with the printer. The sensor signal outputting circuit may return data readings through the shared data pad to the printer as a data communication secured differently than data communications from the integrated circuit to the printer through the shared data pad. For example, the data readings outputted by the sensor signal outputting circuit may be unsecured and the data communications from the integrated circuit may be secured. As an example of a sensor signal outputting circuit, liquid level sensing circuitry may be provided in the internal volume in which the printable liquid is present. Sharing the same data pad D helps achieve an efficient use of available space for the electrical connection pads 14. Fig. 4 shows an example integrated circuit 40 and sensor signal outputting circuit 50.

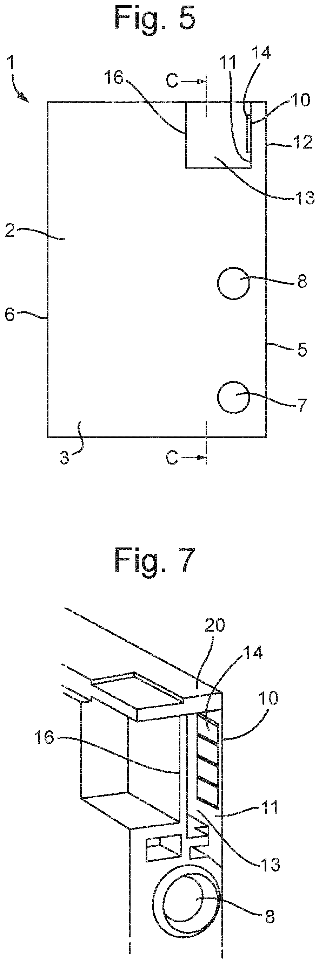

Fig. 5 shows another example printable liquid supply cartridge. In particular, Fig. 5 shows a plan view of the cartridge 1. The example cartridge of Fig. 5 is similar to that of Fig. 1. In the example of Fig. 5, the recess 13 does not extend across the entire width of the front end 3. The recess 13 is delimited by a second wall 16. The recess 13 between the first wall 10 and the second wall 16 may receive an electrical connector of a printer therein to contact the electrical connection pads 14.

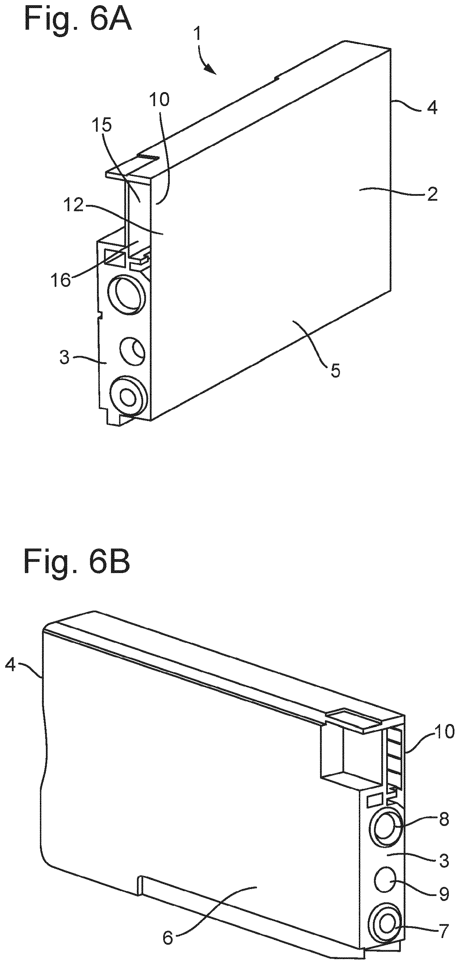

Figs. 6A and 6B are perspective views of another example printable liquid supply cartridge 1. Fig. 7 is a magnified view of part of the cartridge. The same reference numerals are used for like parts. The cartridge 1 has a housing 2 which encloses an internal volume in which the printable liquid, such as ink, can be stored. The housing 2 has a front end 3, a rear end 4, and first and second sides 5, 6 extending from the front end to the rear end. A printable liquid outlet 7 and a gas inlet 8 may be provided on the front end. The printable liquid outlet 7 may be provided closer to the bottom than to the top of the front end 3. The gas inlet 8 may be positioned above the printable liquid outlet 7. The front end may also have a printable liquid inlet 9 to enable the cartridge to be filled or re-filled with printable liquid.

In the example of Figs. 6A, 6B and 7, there may be provided a datum surface 15 across the recess from the internal side 11 of the first wall 10. In the example shown, the datum surface is a side of a second wall 16 facing towards the recess 13.

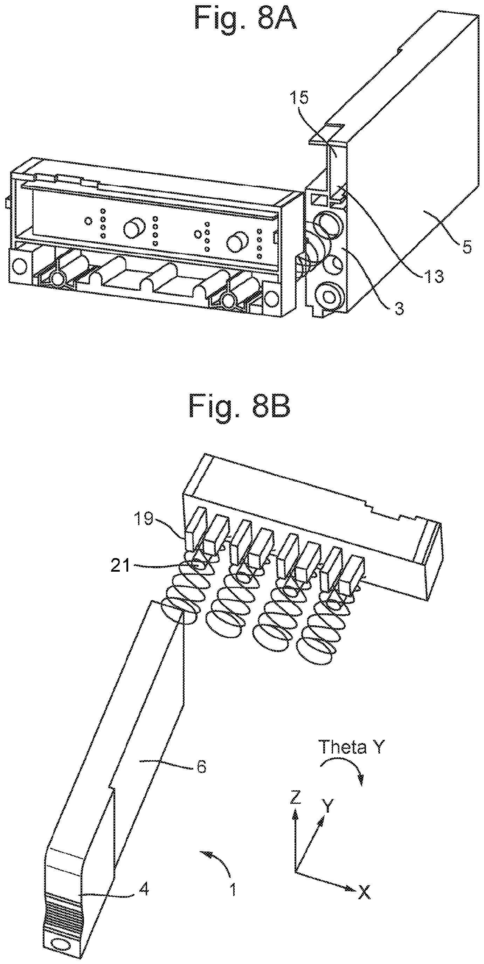

The datum surface 15 helps ensure smooth installation and removal of the printable liquid supply cartridge to and from a printer. This is explained with reference to Figs. 8A to 8D below, which show an example of a cartridge being mounted to a slot of a printer.

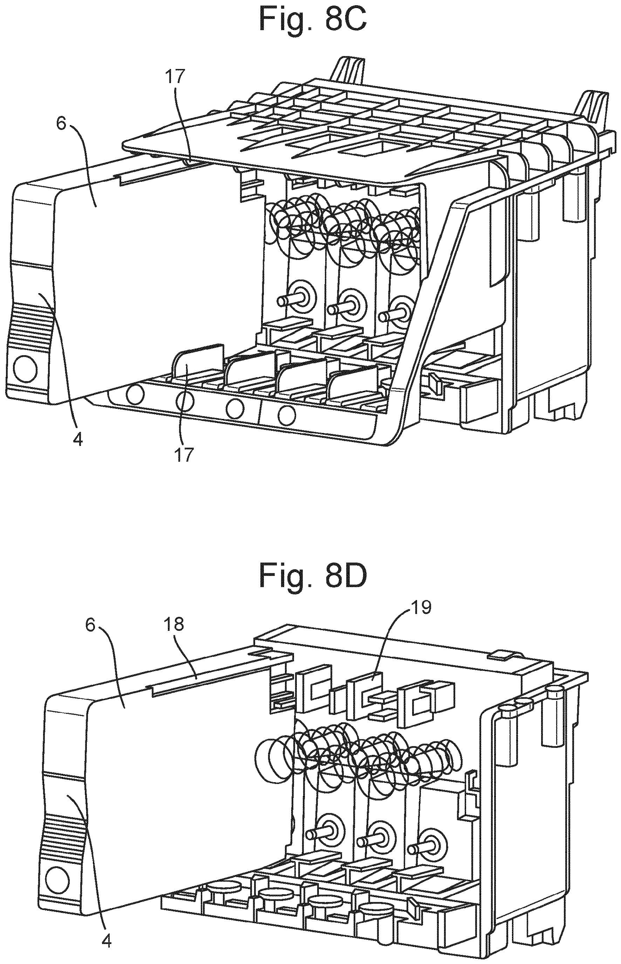

Figs. 8A and 8B show the example cartridge 1 being aligned with a slot of the printer. The initial rough alignment may be aided by guide rails 17 provided on the printer and corresponding guide surfaces 18 on the cartridge, for example on at least one of top and bottom sides thereof, the top and bottom sides extending from the front end towards the rear end of the cartridge. Example guide rails and guide surfaces can be seen in Figs. 8C and 8D. Note that Fig. 8D does not show the guide rails 17 of the printer.

In Fig. 8B, an example electrical connector 19 can be seen on the printer. An example fluid pen 21 to be received by the gas inlet 8 can be seen also. During connection of the cartridge to the printer, the recess 13 receives the electrical connector 19 of the printer and the electrical connection pads 14 on the internal side 11 of the first wall 10 contact the electrical connector 19. As the electrical connection pads 14 contact the electrical connector, this has a tendency to impart a force on the cartridge in a direction substantially perpendicular to a direction of insertion of the cartridge. In other words, in a direction substantially parallel to a widthwise direction of the example cartridge shown. In Fig. 8B, this direction is along the X axis and a force tends to be imparted on the cartridge in the negative X direction. This results in a negative Theta Y moment being imparted to the cartridge such that the cartridge rotates. The cartridge may therefore rotate about a longitudinal axis extending from the front end to the rear end. For example, the cartridge may rotate around the axis of the gas inlet, the fluid pen of the printer typically being flexible and tolerant of some misalignment. This rotation causes misalignment of the cartridge with the printer and the cartridge may become misaligned with the guide rails 17. As a result the cartridge may not be fully installed or may appear to be installed but will leak due to the misalignment, and the cartridge may bind to the guide rails and not eject properly.

The datum surface 15 resists the above described rotation of the cartridge which would otherwise occur. In this example, the datum surface 15 contacts the opposite side of the electrical connector of the printer to that contacted by the electrical connection pads 14. Thus, the datum surface 15 acts against any tendency of rotation of the cartridge. It is noted that the electrical connection pads 14 may be resiliently biased towards the recess, for example by one or more springs. Any biasing of the electrical connection pads increases the rotation tendency of the cartridge, but is counteracted by the datum surface 15.

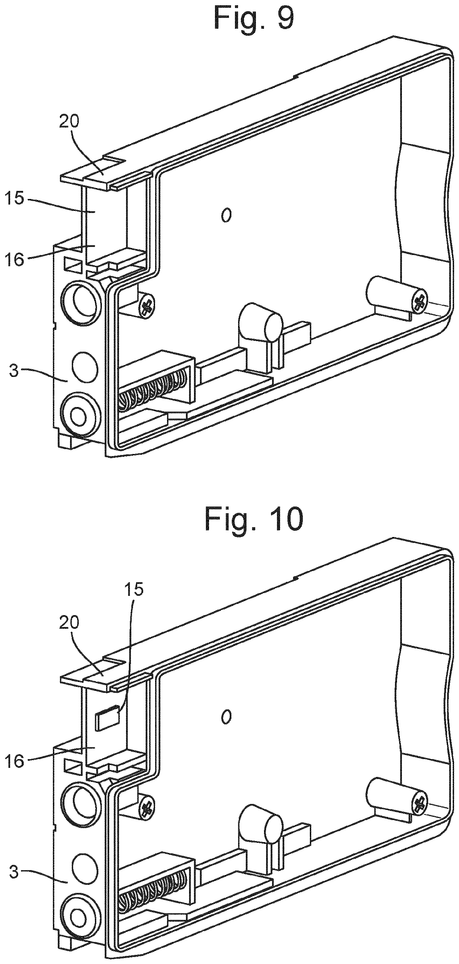

Fig. 9 is a perspective view of an example printable liquid supply cartridge with part of the housing not shown. In particular, the first side 5 and first wall 10 are not shown. In the example of Fig. 9, the datum surface 15 is a side of the second wall 16 facing towards the recess.

Fig. 10 is a perspective view of another example printable liquid supply cartridge with part of the housing not shown. In particular, the first side 5 and first wall 10 are not shown. In the example of Fig. 10, the datum surface 15 is provided as a projection on a second wall 16. The projection projects into the recess 13.

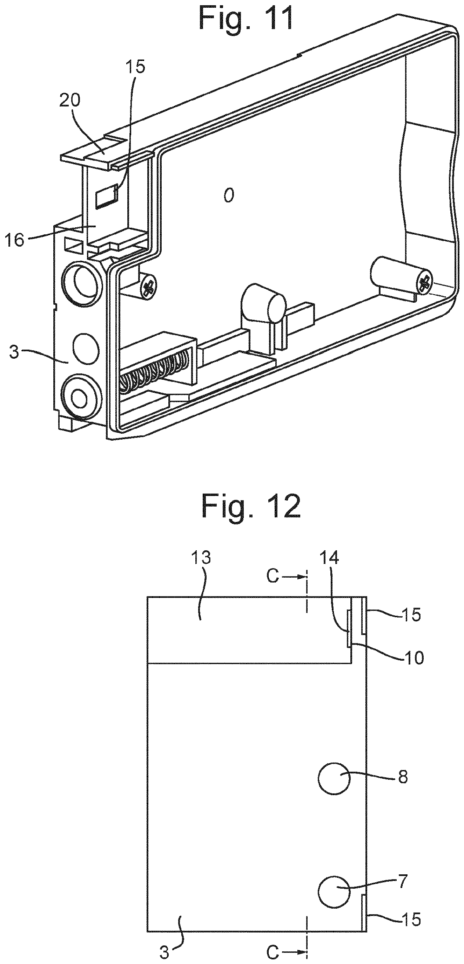

Fig. 11 is a perspective view of another example printable liquid supply cartridge with part of the housing not shown. In particular, the first side 5 and first wall 10 are not shown. In the example of Fig. 11, the datum surface 15 is an indentation in the second wall 16.

As described above, the datum surface 15 and the electrical connection pads 14 may be on opposed sides of a recess 13 to receive the electrical connector therebetween, however the datum surface 15 need not be provided on or as part of a second wall 16. It can otherwise be part of or extend from the housing to contact the electrical connector of the printer and resist rotation of the cartridge.

Alternatively, the datum surface 15 may be part of or extend from the housing to contact a different element of the printer. An example is shown in Fig. 12. Fig. 12 shows a front end of an example cartridge similar to that of Fig. 1. In the example of Fig. 12, a first datum surface 15 is provided on the first wall 10 on the front end 3 and a second datum surface 15 is provided at the bottom of the front end 3 towards the first side 5. At least one of the first datum surface and the second datum surface may be provided.

In the example cartridges of Figures 6A to 12, as in the example cartridges of Figures 1 to 5, the electrical connection pads 14 enable electrical signals to be communicated to and from the cartridge, for example to be exchanged with a printer to which the cartridge is mounted. The communication may be in accordance with an I2C data communication protocol as described above. As already described above, the electrical connection pads 14 may include any of a ground connection pad G, a serial clock connection pad C, a supply voltage connection pad V and a serial data input/output pad D. As also already described above, the cartridge may further include at least one of an integrated circuit and a sensor signal outputting circuit.

In the main embodiment of the invention, a rib is provided to support the first wall 10. An example rib 20 can be seen in Fig. 7. The rib provides support to the first wall so as to protect that wall against deformation, for example if the cartridge is dropped during shipping or handling. This protects the electrical connection pads 14 and any integrated circuit also. The rib may be part of the housing 2. It may extend substantially perpendicularly to the first wall 10. It may be integral with the first wall 10. Alternatively, it may be joined to the first wall by a weld. The weld may comprise plastic material. The rib may also be joined to the second wall 16, if a second wall 16 is present. The rib functions also as a pre-alignment feature to aid the user in aligning the cartridge and the printer, in particular in aligning the electrical connection pads 14 with the electrical connector.

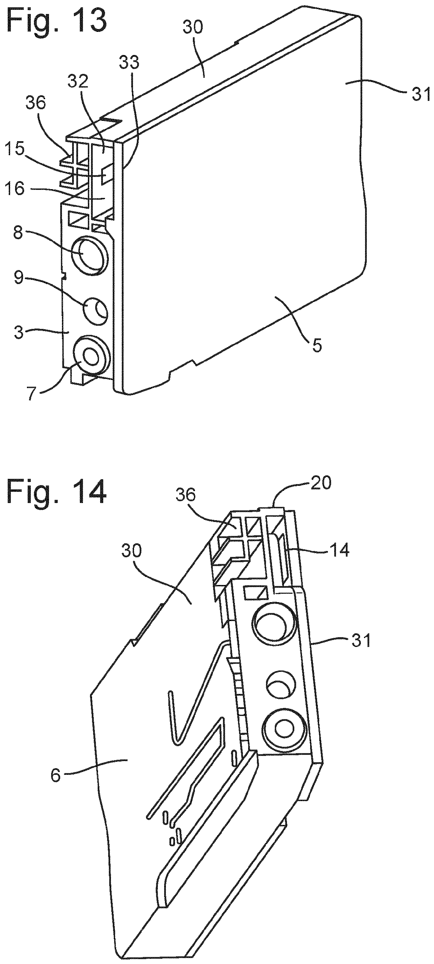

Figs. 13 and 14 are perspective views of another example printable liquid supply cartridge. The structure of the printable liquid supply cartridge is similar to that of the cartridges described above, and like parts are described with the same reference numerals. In the printable liquid supply cartridge of this example, the housing 2 includes a body 30 and a lid 31. The body has a notched corner 32 on the first side 5 of the body towards the front end 3 of the housing 2. The lid 31 has a portion 33 which overhangs the notched corner. The electrical connection pads 14 are provided on the portion 33 of the lid 31 overhanging the notched corner 32 of the body. The electrical connection pads may include one or more of a ground connection pad, a serial clock connection pad, a supply voltage connection pad and a serial data input/output pad. In the example shown, the pads are arranged in a top to bottom direction as shown in Fig. 3. The electrical connection pads may be resiliently biased towards the recess, for example by one or more springs.

The body 30 may have a datum surface 15 to contact an electrical connector 19 of a printer and resist rotation of the cartridge when the electrical connection pads 14 make contact with the electrical connector. The notched corner 32 of the body enables to receive the electrical connector between the portion 33 of the lid 31 and the datum surface 33. The datum surface 15 resists a rotational force imparted to the cartridge by the contact between the electrical connection pads 14 on the portion 33 of the lid 31 and the electrical connector 19 of the printer.

In the example shown, the datum surface 15 is a projection on a wall 16 of the body 30, similar to the arrangement of Fig. 10. Alternatively, the datum structure may be a side of the wall 16 facing towards the portion 33 of the lid, similar to Fig. 9. As a further alternative, the datum structure may be an indentation in the wall 16 of the body, similar to Fig. 11. If a datum surface is present, it need not be provided on or as part of wall 16. It can otherwise be part of or extend from the body to contact the electrical connector or other element of the printer and resist rotation of the cartridge.

In the example printable liquid supply cartridge of Figs. 13 and 14, an integrated circuit may be housed in the portion 33 of the lid 31. It is simple to mount the integrated circuit in the lid and to attach the lid to the body. The lid may be attached to the body by welding. Additionally or alternatively, a sensor signal outputting circuit may be provided in the internal volume of the cartridge in which the printable liquid is housed. Any such integrated circuit or other electrical circuitry may communicate signals to the electrical connection pads 14 and printer as described above in respect of the earlier example cartridges.

As shown in Figs. 13 and 14, a rib 20 may extend between the portion 33 of the lid 31 and the first wall 10 of the body. The rib 20 provides support to the portion 33 of the lid 31 overhanging the notched corner of the body. The rib 20 protects the portion 33 of the lid 31, and the electrical connection pads 14 and any additional circuitry of portion 33, from deformation and damage, as may for example be caused by incorrect handling of the cartridge. The rib may be part of the body 30. It may extend substantially perpendicularly to the portion 33. The rib 20 and the portion 33 of the lid may be joined by a weld. Alternatively, the rib 20 may be integral with the portion 33 of the lid and joined to the body, for example by a weld. A weld may comprise plastic material. The rib may also be joined to or integral with the second wall 16, if a second wall 16 is present.

In the example cartridges described above, the front end of the cartridge may be further provided with one or more lockout keys. The lockout keys may be female lockout keys to match male lockout keys provided on a slot of a printer. Example lockout keys 36 are shown in Figs. 13 and 14. By providing different lockout keys to different printers or printer slots, full insertion of a cartridge into the wrong type of printer or slot can be avoided. For example, it can be prevented that a cartridge containing black ink be fully inserted into a slot intended for a cartridge containing yellow ink.

## Claims

1. A printable liquid supply cartridge (1) comprising:
a housing (2) enclosing an internal volume, the housing having a front end (3) to connect to a printer and first and second sides (5, 6) extending from the front end to a rear end;
the front end having a printable liquid outlet (7) closer to the bottom than to the top and a gas inlet (8) above the printable liquid outlet, each of the printable liquid outlet and the gas inlet to facilitate insertion of a respective fluid pen (21) therein;
a recess (13) in the front end above the gas inlet, the recess being delimited by a first wall (10) having an internal side (11) and an external side (12) that is part of the first side;
an I2C data interface comprising electrical connection pads (14) exposed on the internal side of the first wall facing towards the recess; and
a rib (20) to support the first wall and to protect the electrical connection pads.

2. The cartridge of claim 1, wherein an integrated circuit is connected to the I2C data interface.

3. The cartridge of claim 2, wherein the integrated circuit is provided on the first wall.

4. The cartridge of any preceding claim having a datum surface (15), wherein the datum surface is to resist rotation of the cartridge as the electrical connection pads contact an electrical connector (19) of the printer during connection of the cartridge to the printer, wherein the recess is further delimited by a second wall opposed to the first wall, and wherein the datum surface is one of: a side of the second wall facing towards the recess, a projection on the second wall and projecting into the recess, and an indentation in the second wall.

5. The cartridge of claim 4, wherein the datum surface is to contact an opposite side of the electrical connector of the printer to that contacted by the electrical connection pads.

6. The cartridge of any of claims 4 to 5, wherein the recess is to receive the electrical connector to establish an electrical connection between the electrical connection pads and the electrical connector.

7. The cartridge of claim 6, wherein the datum surface and the electrical connection pads are on opposed sides of the recess to receive the electrical connector therebetween.

8. The cartridge of any of claims 1 to 3 having a datum surface (15), wherein the datum surface is to resist rotation of the cartridge as the electrical connection pads contact an electrical connector (19) of the printer during connection of the cartridge to the printer, wherein the datum surface is part of or extends from the housing.

9. The cartridge of claim 8, wherein the datum surface is to contact the electrical connector or a different element of the printer.

10. The cartridge of any preceding claim, the housing defined by two hard-body plastic shells that enclose the inner volume wherein the electrical connection pads are provided on one of the shells.

11. The cartridge of any preceding claim, wherein the rib extends substantially perpendicular to the first wall.

12. The cartridge of any preceding claim, wherein the rib is integral with the first wall, or wherein the rib and the first wall are joined by a weld.

## Patentansprüche

1. Bedruckbare Flüssigkeitszufuhrkartusche (1), die Folgendes umfasst:
ein Gehäuse (2), das ein Innenvolumen umschließt, wobei das Gehäuse ein vorderes Ende (3), um mit einem Drucker verbunden zu werden, und eine erste und eine zweite Seite (5, 6) aufweist, die sich aus dem vorderen Ende zu einem hinteren Ende erstrecken;
wobei das vordere Ende einen bedruckbaren Flüssigkeitsauslass (7), der näher an der Unterseite als an der Oberseite ist, und einen Gaseinlass (8) über dem bedruckbaren Flüssigkeitsauslass aufweist, wobei sowohl der bedruckbare Flüssigkeitsauslass als auch der Gaseinlass dazu dienen, ein Einsetzen eines jeweiligen Fluidstifts (21) darin zu ermöglichen;
eine Vertiefung (13) in dem vorderen Ende über dem Gaseinlass, wobei die Vertiefung durch eine erste Wand (10) begrenzt wird, die eine Innenseite (11) und eine Außenseite (12), die Teil der ersten Seite ist, aufweist;
eine 12C-Datenschnittstelle, die elektrische Verbindungspads (14) umfasst, die auf der Innenseite der ersten Wand, die der Vertiefung zugewandt ist, freiliegen; und
eine Rippe (20), um die erste Wand zu tragen und um die elektrischen Verbindungspads zu schützen.

2. Kartusche nach Anspruch 1, wobei eine integrierte Schaltung mit der I2C-Datenschnittstelle verbunden ist.

3. Kartusche nach Anspruch 2, wobei die integrierte Schaltung an der ersten Wand bereitgestellt ist.

4. Kartusche nach einem der vorstehenden Ansprüche, die eine Bezugsfläche (15) aufweist, wobei die Bezugsfläche dazu dient, einer Drehung der Kartusche zu widerstehen, wenn die elektrischen Verbindungspads einen elektrischen Verbinder (19) des Druckers während einer Verbindung der Kartusche mit dem Drucker kontaktieren, wobei die Vertiefung ferner durch eine zweite Wand, die der ersten Wand gegenüber liegt, begrenzt ist, und wobei die Bezugsfläche eines ist von: einer Seite der zweiten Wand, die der Vertiefung zugewandt ist, einem Vorsprung auf der zweiten Wand und der in die Vertiefung hineinragt, und einer Einkerbung in der zweiten Wand.

5. Kartusche nach Anspruch 4, wobei die Bezugsfläche dazu dient, eine gegenüberliegende Seite des elektrischen Verbinders des Druckers zu kontaktieren, die von den elektrischen Verbindungspads kontaktiert wird.

6. Kartusche nach einem der Ansprüche 4 bis 5, wobei die Vertiefung dazu dient, den elektrischen Verbinder aufzunehmen, um eine elektrische Verbindung zwischen den elektrischen Verbindungspads und dem elektrischen Verbinder herzustellen.

7. Kartusche nach Anspruch 6, wobei die Bezugsfläche und die elektrischen Verbindungspads sich auf gegenüberliegenden Seiten der Vertiefung befinden, um den elektrischen Verbinder dazwischen aufzunehmen.

8. Kartusche nach einem der Ansprüche 1 bis 3, die eine Bezugsfläche (15) aufweist, wobei die Bezugsfläche dazu dient, einer Drehung der Kartusche zu widerstehen, wenn die elektrischen Verbindungspads einen elektrischen Verbinder (19) des Druckers während einer Verbindung der Kartusche mit dem Drucker kontaktieren, wobei die Bezugsfläche Teil des Gehäuses ist oder sich von diesem erstreckt.

9. Kartusche nach Anspruch 8, wobei die Bezugsfläche dazu dient, den elektrischen Verbinder oder ein unterschiedliches Element des Druckers zu kontaktieren.

10. Kartusche nach einem der vorstehenden Ansprüche, wobei das Gehäuse durch zwei Hartkörper-Kunststoffschalen definiert ist, die das Innenvolumen umschließen, wobei die elektrischen Verbindungspads an einer der Schalen bereitgestellt sind.

11. Kartusche nach einem der vorstehenden Ansprüche, wobei sich die Rippe im Wesentlichen senkrecht zu der ersten Wand erstreckt.

12. Kartusche nach einem der vorstehenden Ansprüche, wobei die Rippe mit der ersten Wand einstückig ist oder wobei die Rippe und die erste Wand durch eine Schweißung zusammengefügt sind.

## Revendications

1. Cartouche d'alimentation en liquide imprimable (1) comprenant :
un logement (2) enfermant un volume interne, le logement ayant une extrémité avant (3) pour connexion à une imprimante et des premier et second côtés (5, 6) s'étendant de l'extrémité avant à une extrémité arrière ;
l'extrémité avant ayant une sortie de liquide imprimable (7) plus près du fond que du sommet et une entrée de gaz (8) au-dessus de la sortie de liquide imprimable, chacune parmi la sortie de liquide imprimable et l'entrée de gaz étant destinée à faciliter insertion d'un stylo à fluide respectif (21) en son sein ;
un renfoncement (13) dans l'extrémité avant au-dessus de l'entrée de gaz, le renfoncement étant délimité par une première paroi (10) ayant un côté interne (11) et un côté externe (12) qui fait partie du premier côté ;
une interface de données I2C comprenant des plots de connexion électrique (14) exposés sur le côté interne de la première paroi faisant face au renfoncement ; et
une nervure (20) pour supporter la première paroi et pour protéger les plots de connexion électrique.

2. Cartouche selon la revendication 1, dans laquelle un circuit intégré est connecté à l'interface de données I2C.

3. Cartouche selon la revendication 2, dans laquelle le circuit intégré est fourni sur la première paroi.

4. Cartouche selon l'une quelconque revendication précédente ayant une surface de référence (15), la surface de référence étant destinée à résister à une rotation de la cartouche à mesure que les plots de connexion électrique viennent en contact avec le connecteur électrique (19) de l'imprimante pendant une connexion de la cartouche à l'imprimante, le renfoncement étant en outre délimité par une seconde paroi opposée à la première paroi, et la surface de référence étant l'un parmi : un côté de la seconde paroi faisant face au renfoncement, une saillie sur la seconde paroi et faisant saillie dans le renfoncement, et une indentation dans la seconde paroi.

5. Cartouche selon la revendication 4, dans laquelle la surface de référence est destinée à venir en contact avec un côté du connecteur électrique de l'imprimante opposé à celui qui est en contact avec les plots de connexion électrique.

6. Cartouche selon l'une quelconque des revendications 4 à 5, dans laquelle le renfoncement est destiné à recevoir le connecteur électrique pour établir une connexion électrique entre les plots de connexion électrique et le connecteur électrique.

7. Cartouche selon la revendication 6, dans laquelle la surface de référence et les plots de connexion électrique sont sur des côtés opposés du renfoncement pour recevoir le connecteur électrique entre eux.

8. Cartouche selon l'une quelconque des revendications 1 à 3 ayant une surface de référence (15), la surface de référence étant destinée à résister à une rotation de la cartouche à mesure que les plots de connexion électrique viennent en contact avec un connecteur électrique (19) de l'imprimante pendant la connexion de la cartouche à l'imprimante, la surface de référence faisant partie, ou s'étendant à partir, du logement.

9. Cartouche selon la revendication 8, dans laquelle la surface de référence est destinée à venir en contact avec le connecteur électrique ou un élément différent de l'imprimante.

10. Cartouche selon l'une quelconque revendication précédente, le logement étant défini par deux coques en plastique à corps dur qui entourent le volume interne, les plots de connexion électrique étant fournis sur l'une des coques.

11. Cartouche selon l'une quelconque revendication précédente, dans laquelle la nervure s'étend sensiblement perpendiculaire à la première paroi.

12. Cartouche selon l'une quelconque revendication précédente, dans laquelle la nervure est solidaire de la première paroi, ou dans laquelle la nervure et la première paroi sont jointes par une soudure.
